# EUROPEAN PATENT APPLICATION

(11) **EP 4 677 999 A1**
(43) Date of publication of application: **14.01.2026**
(21) Application number: 24783899.8
(22) Date of filing: 02.04.2024
(51) Int. Cl.: A01K 45/00, G06V 40/10, G06V 40/16

(54) **EQUIPMENT AND METHOD FOR ANALYSING INDIVIDUAL CHARACTERISTICS AND DETERMINING THE SEX OF BIRDS**

(30) Priority: 06.04.2023 BR 102023006539
(71) Applicant: Antonello, Ricardo, 89600000 Joaçaba (BR); Harvey Antunes, Gregori, 89609-000 Luzema (BR); Gustavo Schmidt, Luan, 89610-000 Herval D'Oeste (BR)
(72) Inventor: ANTONELLO, Ricardo, 89600000 Joaçaba (BR); HARVEY ANTUNES, Gregori, 89609-000 Luzema (BR)
(74) Representative: Lorente Berges, Ana
(86) International application number: PCT/BR2024/050135
(87) International publication number: WO 2024/207087

(57) **Abstract**

This invention, which belongs to the poultry farming sector, refers to equipment to transport birds along a conveyor belt system, and direct then to image capture heads These units are equipped with warm air blowers, warming the birds and causing them, at the same time, to open their wings just as they enter the head, which allows photographs to be taken for analysis. The place where the bird is located moves up and down as a unit, constantly, together with the blowers, which allows several images to be accurately captured. The operating system can then accurately identify individual characteristics, such as possible malformations, absence of feathers at birth, unexpected coloration and, in particular, the sex of each bird.

## Description

### Technical Section for the Invention

This invention, which belongs to the poultry farming sector, refers to equipment to transport birds along a conveyor belt system, and direct then to image capture heads. These units are equipped with warm air blowers, warming the birds and causing them, at the same time, to open their wings just as they enter the head, which allows photographs to be taken for analysis. The place where the bird is located moves up and down constantly, together with the blowers, as a unit, which allows several images to be accurately captured. The operating system can then accurately identify individual characteristics, such as possible malformations, absence of feathers at birth, unexpected coloration and, in particular, the sex of each bird.

### State of the Art

Bird sexing analysis is a procedure that determines the sex of a bird, based on either genetic or morphological characteristics. There are several sexing analysis techniques available for birds, and the choice of technique depends on various factors, such as the bird's species, age, size and the type of sample available.

One of the most common techniques for bird sexing is DNA-based PCR (Polymerase Chain Reaction). This uses a specific set of primers to amplify the DNA of the sex chromosome that determines the sex of the bird. This technique generally uses blood, feather or tissue samples.

Another technique for bird sexing is plumage analysis, which is directly relevant to this application. This uses morphological characteristics to determine the bird's sex. The coloration and pattern of the plumage in some bird species differs between the sexes. This allows sex to be determined by visual observation. Obviously, this technique is not as accurate as DNA-based analysis.

Bird sexing is important in many areas of biology, such as biodiversity conservation, breeding in captivity and behavioral research. Determining the sex is fundamental in understanding the reproductive biology of birds, and can help inform management and conservation strategies for endangered species.

A large part of the poultry industry uses processes for sexing birds for several reasons, including: Sex selection, where females are often used for egg production, while males are often used for broiler meat production; Production efficiency, so that companies can optimize their resources and maximize production efficiency; Costs, although it is an additional cost, the sexing process is often considered necessary in order to maximize long-term profitability - as it avoids the need to separate them later, this can reduce associated labor and logistics costs; More effective quality control, ensuring that only high-quality chicks enter the production systems, which can help minimize health problems and maximize overall performance.

The use of male and female birds can vary, depending on the specific practices of the poultry farm and local regulations. After the sexing process, female birds are generally sent for rearing on farms that specialize in broiler chickens or egg-layers. They are reared until they reach the desired weight or for egg production and are then either slaughtered or continue laying eggs, respectively. Male birds, meanwhile, are reared for broiler meat. They are either fed and reared until they reach the ideal slaughter weight, or used for reproduction in poultry operations that have programs for this purpose. Some male birds may be chosen as breeders to produce offspring for further generations of commercial birds, or they may be culled. In some cases, especially in intensive commercial egg production operations, male birds may be culled shortly after the sexing process. This may involve euthanasia, by means of macerators or gas methods that ensure efficient disposal, while minimizing suffering.

All over the world, this process is done manually and workers need to be specifically trained for this purpose. There are basically two techniques in morphological sexing: one examines the set of primary and secondary feathers on the tips of the wings where the size configuration indicates the sex of the bird; the other techniques is based on the cloaca, but is not widely used.

Developing the skills to sex birds is a slow process, and it can take several months for workers to be able to perform it satisfactorily. It is also tiring and repetitive; some of the more skilled workers can examine 3,000 birds per hour in 8-hour shifts per day, for example.

It is also crucial in Poultry farming to be able to analyze the individual characteristics of the birds, for several reasons. Firstly, it is possible to identify potential health issues, such as malformation, illness or injury, which allows the farmer to make an early intervention and give appropriate treatment. Being able to analyze the bird's individual characteristics is also fundamental in breeding birds; it helps farmers to select the best specimens for reproduction and production.

However, there are significant issues with such analysis at present. Identifying specific characteristics visually is time consuming, especially for large flocks of birds, and often inaccurate. In addition, it can be difficult to detect certain features, such as internal malformations, without a detailed examination. The lack of automated and efficient methods for examining birds individually is also a limitation, which may result in data that is important for poultry management and production being underutilized.

### New Features of this Invention.

In the context of this situation, the implementation of a machine and method that can analyze the sex and individual characteristics of birds can provide a number of benefits to the poultry industry. This automated system, in addition to accurately determining the sex of each bird, is able to identify health issues, such as malformations, injuries or diseases, which allows for early intervention to ensure the welfare of the birds. The analysis also makes it easier to select the best specimens for reproduction, which helps to improve breeding in poultry programs. Furthermore, production can be more efficient and with better health conditions, as the development of the birds can be monitored over time and adapted according to their needs. The detailed analysis of individual characteristics contributes to quality assurance, by helping to produce more uniform batches that meet the standards required by consumer markets. Altogether, these benefits improve both the welfare of the birds and the efficiency and quality of poultry production, strengthening the position of companies in this sector.

This invention allows workers to be reallocated to other tasks and reduces their exposure to repetitive strain injuries, eye fatigue and spinal problems. It can increases the production capacity of the facility by allowing it to operate continuously, 24 hours a day. It makes the bird sexing process more effective and reduces operating costs, which increases the companies' profitability.

### Description of the attached drawings.

This invention must be able to be understood in full and any technician in this field must be able to put it into practice. Therefore, it should be clearly, concisely and sufficiently well described, based on the drawings that illustrate and support it, which are attached and listed below:
**Figure 1** shows a perspective view of the equipment;
**Figure 2** shows a perspective view of the equipment;
**Figure 3** shows a perspective view of the equipment, highlighting the image capture head system;
**Figure 4** shows a perspective view of the conveyor system;
**Figure 5** shows a perspective view of the articulated flap system;
**Figure 6** shows a perspective view of the third conveyor belt, with integrated sensors and a system of articulated flaps that push the birds towards the heads;
**Figure 7** shows a perspective view of the third conveyor belt, highlighting the buffer compartment attached to the head;
**Figure 8** shows a perspective view of the buffer compartment;
**Figure 9** shows a perspective view of the image capture head system;
**Figure 10** shows a perspective view of an image capture head system;
**Figure 11** shows a perspective view of an image capture head system;
**Figure 12** shows a perspective view of an image capture head system;
**Figure 13** shows a perspective view of the directing mechanism;
**Figure 14** shows a perspective view of the head attached to the three-position directing mechanism that pushes the birds to the dispatch module.

### Detailed Description of the Invention

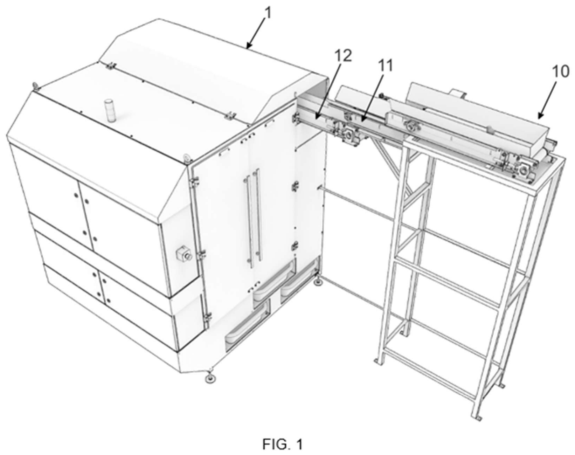

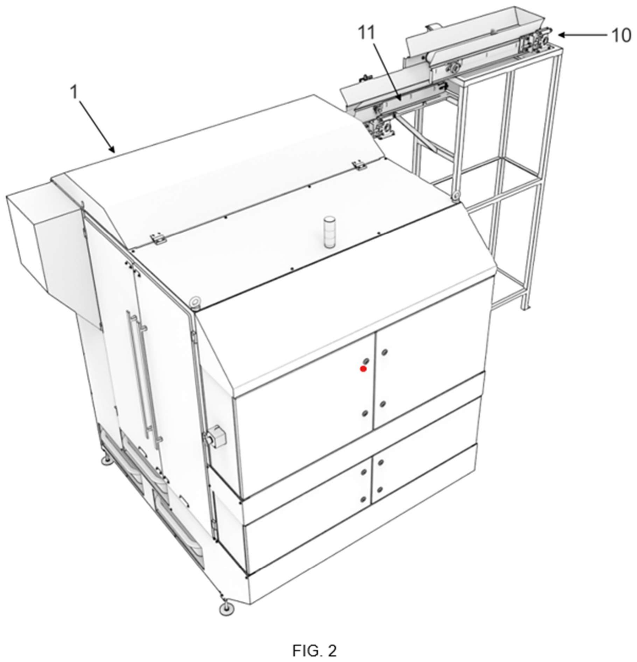

This invention consists of equipment that transports birds using a conveyor belt system, and delivers each bird into an image capture head, in order to examine the sex and other characteristics of the birds, as shown in Figures 1 and 2.

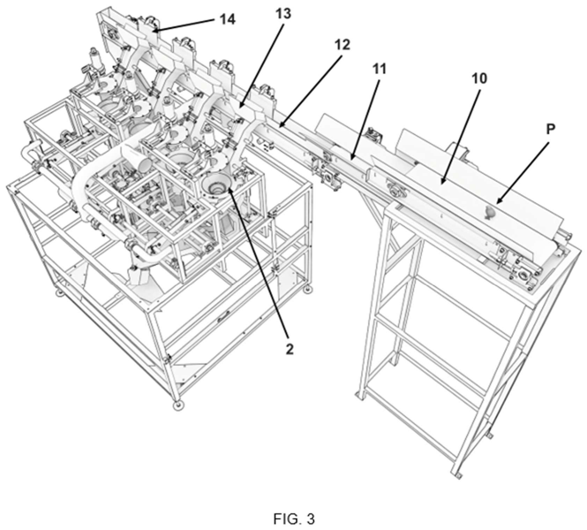

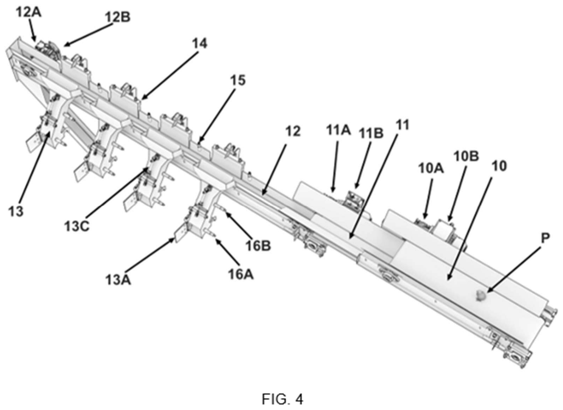

The automatic delivery system, as illustrated in Figures 3 and 4, consists of a set of three conveyor belts (10)(11)(12), preferably 80 mm wide, sufficient to accommodate the birds in a single line. Depending on the facilities available, an inclined conveyor belt or other means of transporting the birds to conveyor belt (10) could be added.

The conveyor belts (10)(11)(12) are made of canvas, with an optional rough surface (called 'ergonomic') to prevent the birds from slipping while in motion or changing speed. The conveyors are driven individually by shafts connected to their respective transmission boxes (10A)(11A)(12A) and to their respective induction motors (10B) (11B)(12B). The speed of these motors is controlled by frequency inverters. Each conveyor operates at a different speed: the first conveyor (10) operates at a reduced speed - 50% of the speed of conveyor (12); the second conveyor (11) at an intermediate speed - 75% of the speed of conveyor (12); and the third conveyor (12) operates at high speed, between 0.5 and 1.5 m/s, but preferably 1 m/s.

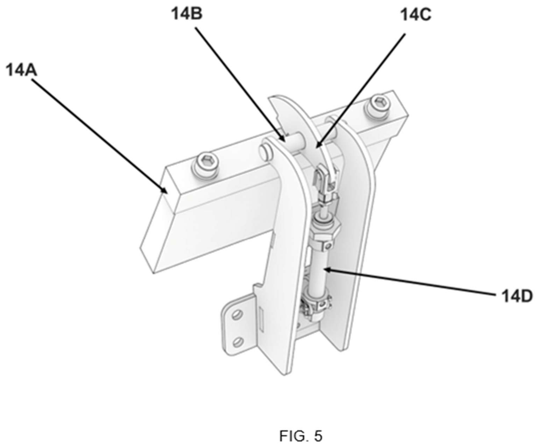

This speed configuration allows for the birds, which have to trigger photoelectric sensors (15) along the route, to be separated uniformly. When triggered, these sensors (15) activate an articulated flap system (14). The system has a rotation axis at its upper end (14B) and is fixed to a small lever arm (14C) that is connected to the rod of a pneumatic actuator (14D) and is activated by it, as illustrated in Figure 5. The flap (14) is made of a rigid block (14A) of nylon with nylon bristles inserted into it (the block is solid with holes where the bristles, made of the same material, are inserted). This forms a kind of "broom" that is intended to push the birds without causing them any injury.

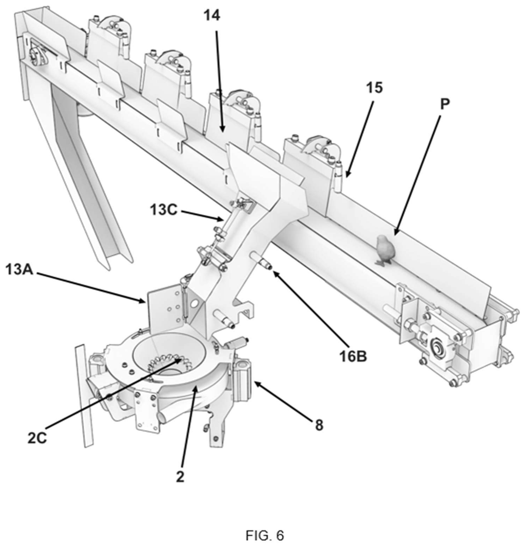

The flap (14) is positioned at the side of the fast conveyor belt (12) parallel to its direction, and also in front of the entrance to the first buffer compartment (13), which is fixed to the opposite side of the conveyor belt (12), also parallel to its direction, as shown in Figure 6. The flap (14) is responsible for directing the bird to the first buffer compartment (13), with a quick flick, pushing the bird (P) as it passes in front and directing it, therefore, into the first buffer (13).

Once the first buffer (13) is occupied, the Programmable Logic Controller (PLC) prevents the flap (14) from being activated again while the photoelectric sensor (16B) of the first buffer (13) indicates that it is occupied. Therefore, no more birds may enter until the space has been released; ensuring that only one bird at a time is allocated to a buffer section (13).

After a bird (P) is directed into the first buffer (13), the flap (14) returns to its starting position, allowing the next bird (P) to proceed along the conveyor belt (12) until it reaches the next sensor (15) and flap (14). This design ensures that the birds (P) can be separated and distributed efficiently, which provides an optimal individual, automated delivery system.

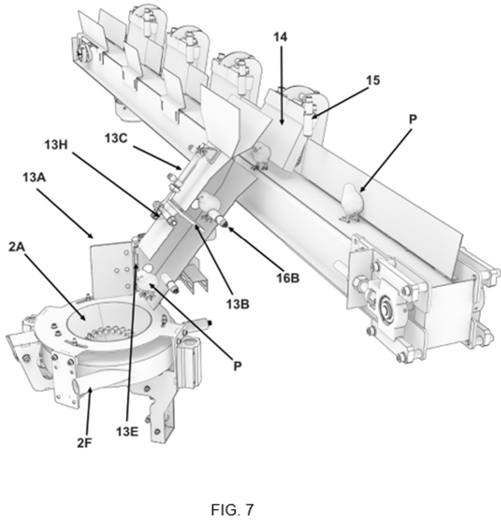

As illustrated in Figure 7, the buffer mechanism (13) should preferably be constructed in a rectangular tubular shape, at an angle of 60° to the floor and divided into multiple levels or sections, physically separated by at least two flaps (13A)(13B) and each section should have a photoelectric sensor (16A)(16B) to detect the presence of birds. This sensor (16A)(16B) sends an electrical signal to the Programmable Logic Controller (PLC) to notify it that a bird (P) is in the respective section and indicate that that section is occupied.

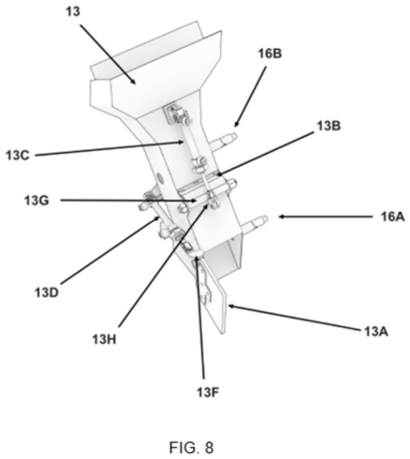

Each section is equipped with a flap to provide a divider between sections. These flaps (13A)(13B) are made of rubber to prevent injuring the birds. This rubber is rectangular and shaped to fit the buffer section, large enough to isolate the section. **It** is fixed by one edge to a metal shaft (13E)(13G), which in turn is attached to a small lever arm (13F)(13H) that is connected to the rod of a pneumatic actuator (13C)(13D), which operates the mechanism, as shown in Figure 8.

The flaps (13A)(13B) act as dynamic dividers, allowing birds (P) to move from one section to another, while ensuring that only one bird (P) is in each section. They are transferred by opening one flap (13A)(13B) at a time, in sequence, starting with the flap (13A) for the last section, the one closest to the image capture head. When it is opened, the bird (P) falls down to the next section; then the flap (13A) is closed again. This process repeats successively for each buffer flap (13), allowing all of the birds (P) to advance one stage.

The flap (13A) located in the last section of the buffer (13) is vital, as it is responsible for directing the birds towards the image capture head (2). When a bird is released from the image capture head (2), an electrical signal is sent to the Programmable Logic Controller (PLC), which, in turn, starts advancing the birds through the buffer sections (13), thereby ensuring that new birds (P) are continually delivered to the image capture head (2).

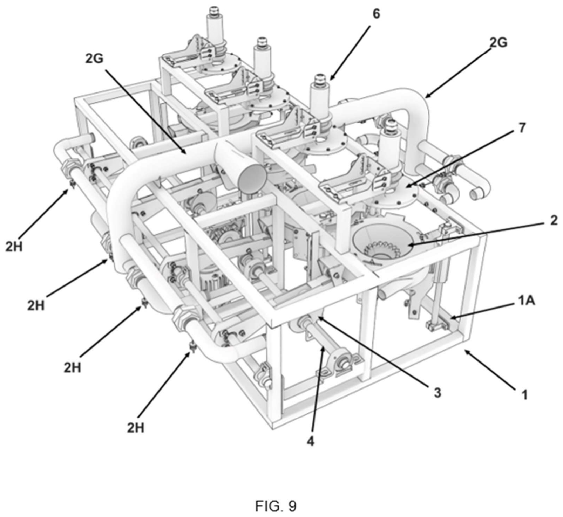

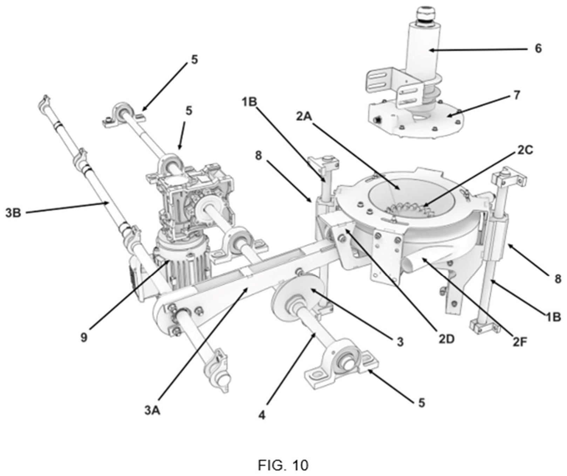

As shown in Figures 9 and 10, the frame of the unit (1) includes a base (1A) that supports two vertical rails (1B) to allow the image capture head (2) to move. This centers and holds the birds (P) in place so that there is no variation in their X and Y positions. **It** has a number of warm air blowers (not illustrated) distributed evenly at angles, placed at an upward angle. The frame (1) also has a cam system (3) attached to a shaft (4) positioned by bearings (5) and driven by a motor (9), with a follower (3A) attached through bearings to a fixed shaft (3B) at one end and at the opposite end it supports the retaining structure of the head (2D). There is also a camera (6) and light source (7) positioned at the top center of the head (2). The image capture head (2) is fixed by its outer side to the guides (8) and attached to the rails (1B), which allow the component to move in a vertical direction. The birds (P) are delivered into the head (2) through the top (the opposite side to the hatch).

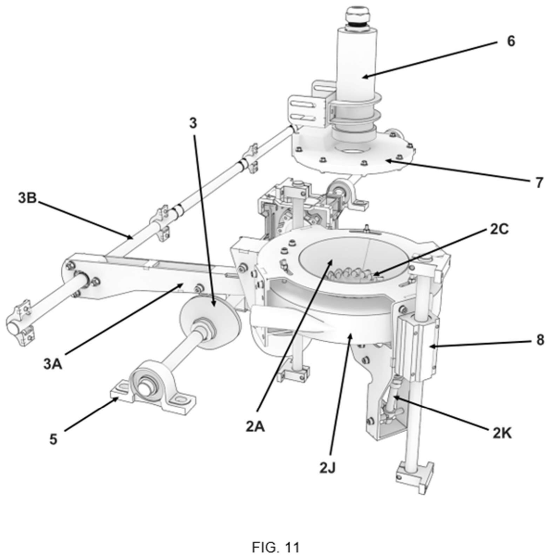

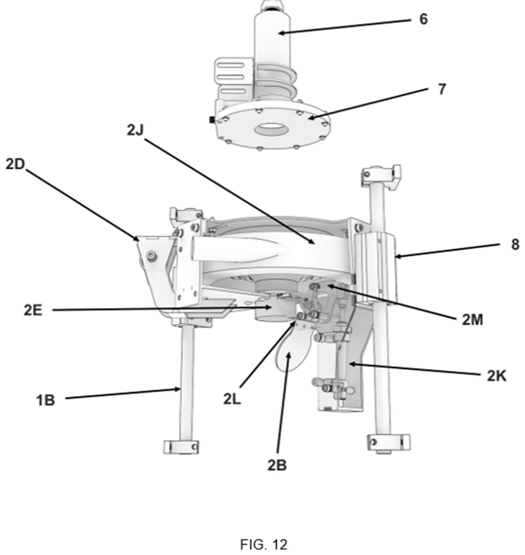

As shown in Figures 11 and 12, the image capture head (2) is cylindrical and divided into two levels (2A)(2E) with different diameters. The first level (2A) has a bigger internal diameter and the inner chamber (2J) is in the shape of a ring to allow the air pumped through the holes (2C) on the inside surface of the head (2) to circulate. The air chamber is fed by the connections (2F) for the hoses (not illustrated), which in turn are connected to the air distribution pipe (2G). This is fed by a high airflow fan (not illustrated) and the temperature is controlled by an electric resistance system (2H). There are also holes (2C) arranged side by side along the diameter, pointing towards the geometric center of the head (2), on the side of the head with the larger internal diameter (2A). These are on its inside and connect the air chamber with the internal part of the head. The second level (2E) of the head (2) has a smaller internal diameter and is attached to the hatch (2B) for releasing the birds, which is fixed at one end to a metal shaft (2L). This shaft is attached to a lever arm (2M), which is connected to the rod of a pneumatic actuator (2K) that operates it. The hatch (2B) remains closed while the analysis is going on, sealing the hole in the head and keeping the bird (P) in place. Once the analysis is over, the trapdoor (2B) is opened to release the bird and then closed for the next examination.

The objective of the equipment is to give the bird (P) the sense that it is falling, while allowing it to keep its feet in contact with the floor, so that one bird at a time enters the image capture head (2). This then moves up and down several times until the system has obtained an image suitable for sexing. It is important that the equipment moves up and down at a constant speed so that the birds' wings open naturally, as if it was falling, but not so fast as to be uncomfortable, unsafe or eject the bird out of the image capture head. As the blowers make contact with the bird's wings, the finest down opens up, which exposes the stiffer feathers so that they can be photographed. While the vertical motion of the image capture head causes them to open their wings. The method designed is for analyzing the photographs and determining the bird's sex. This is a comparison of the photos taken with data already contained in the database.

A trigger (not illustrated) is used to activate the camera (6) so that it takes at least 2 images of each bird during the downward motion of the image capture head (2).

Once the image capture stage (that which takes place in the head (2)) is complete, the hatch (2B) is opened and the bird (P) is allowed to fall into the three-position directing mechanism (17) that is responsible for sending the bird to the dispatch module.

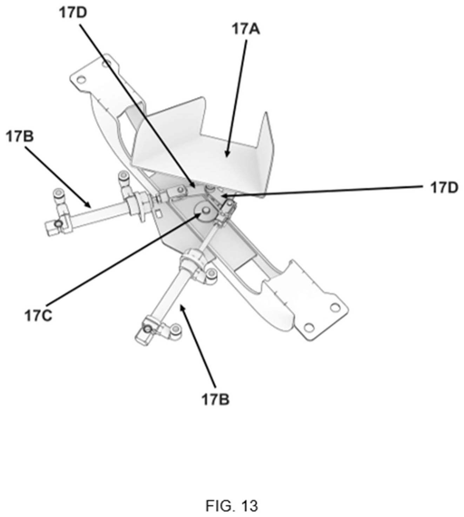

As illustrated in Figure 13, the directing mechanism (17) is formed by a "U" shaped tube (17A) and fixed at an angle of 60° to the floor. The base width of the entrance at the top is 1.6 times that of the exit at the bottom, which should preferably have an opening of 80 mm. This forms a funnel. The underside of this chute (17A) is fixed to a rotating vertical shaft (17C) which allows it to rotate horizontally. This rotating vertical shaft is connected to two lever arms (17D) with an angle of 45° between them. These lever arms in turn, are connected at their opposite ends to two pneumatic actuators (17B), one for each arm, which allow the chute to be rotated into three fixed positions - -45°, 0° and 45°. This rotation is controlled by the Programmable Logic Controller (PLC), which activates the actuators (17B) to rotate to the correct position according to the result of the sexing analysis, i.e. they only rotate once the system has identified the sex of the bird.

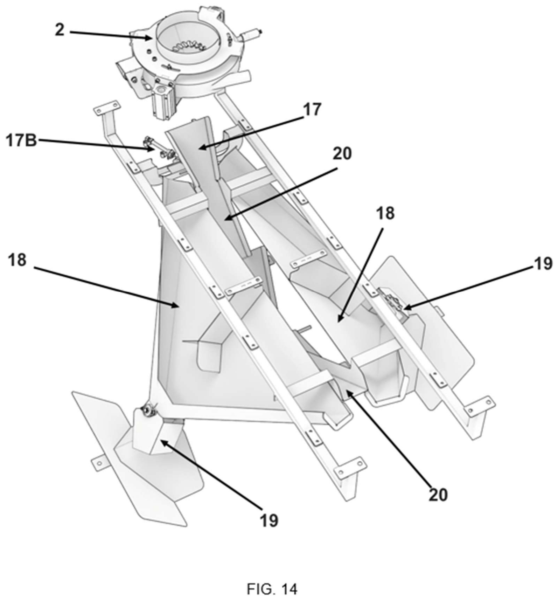

The dispatch module is adaptable and has several possible configurations. One dispatch option is to allocate them by crate, as illustrated in Figure 14. In this arrangement, the birds coming from the three-position directing mechanism (17) slide down individual chutes (18)(20) in one of each of the three positions of the directing mechanism. These finally lead to the appropriate allocated bird crate, via a two-position selector funnel system (19). The upper end of this is fixed to two bearings, which act as a reference rotating shaft. The selector funnel (19) has a metal shaft on its rear side, connected to a pneumatic actuator that operates it (this is not illustrated in the figure because it is on the opposite side). This system allows the birds (P) to drop into the appropriate crate, until it reaches its maximum capacity. Once it is full, the selector funnel (19) changes its direction and fills the next crate. Each exit from the three-position directing mechanism (17) is linked to a two-position selector chute (19), and, therefore, to a respective allocated crate. This segregates the birds after they have already been separated according to sex or for re-analysis.

Another dispatch option is to allocate the birds by conveyors (not illustrated): In this configuration, the birds (P) are transferred from the three-position directing mechanism (17) directly onto conveyor belts (not illustrated). The belts should preferably be 80 mm and sufficient to accommodate the birds (P) in single file. The conveyor belts are made from canvas, preferably with a rough surface (called 'ergonomic'), to prevent the birds from slipping while in motion. The conveyors are driven by separate shafts, attached via respective transmission boxes (not illustrated) to respective induction motors (not illustrated). The speed of the motors is controlled by frequency inverters. Each position of the three-position directing mechanism (17) corresponds to a specific destination, based on sex or the need for re-analysis. This ensures the birds are appropriately separated for the next stages of the production process.

The method for analyzing the sex and individual characteristics of birds therefore comprises the following steps:
a) The birds (P) are placed on conveyor (10), which operates at 50% of the speed of conveyor (12);
b) The birds (P) are transported in a single file to conveyor (11), which operates at 75% of the speed of conveyor (12);
c) The birds (P) are transported to the third conveyor (12), which operates at between 0.5 and 1.5 m/s, but preferably at 1 m/s. As the birds (P) are transferred from one conveyor to another they are evenly separated, as each section runs at a higher speed;
d) When the photoelectric sensors (15) along the path of conveyor (12) detect the birds, they activate an articulated flap system, (14), which pushes and directs the birds (P), individually, into the first buffer compartment (13);
e) When the first section of the buffer (13), separated by flap (13B), is identified by the sensor (16B) as being occupied, the sensor sends an electrical signal to the Programmable Logic Controller (PLC), which prevents flap (14) from being activated again and preventing any more birds (P) entering, until the section is empty again;
f) The flap (14) returns to its original position, allowing the next bird (P) to continue down the conveyor belt (12) until it reaches the next sensor (15) and flap (14);
g) When the sensor (16A) identifies that the section separated by flap (13A) is empty, it sends an electrical signal to the Programmable Logic Controller (PLC) to allow flap (13B) to open. The bird (P) falls down into the next section and flap (13A) remains closed;
h) When the Programmable Logic Controller (PLC) is informed that the hatch (2B) has been opened by the pneumatic actuator (2K), it concludes that the image capture head (2) is empty, and once the hatch (2B) has been closed again, it allows flap (13A) to open. This releases a bird (P) to fall into the image capture head (2) for the next analysis. This process is then repeated successively, so that all the birds (P) in the buffer sections (13) move along one stage, and new birds (P) continue to be delivered into the image capture head (2);
i) When a bird is inside the image capture head (2), the blowers, which have already been activated, keep the fine down on the bird's wings open;
j) While step i) is going on, the image capture head (2) moves vertically, and when it passes the trigger, the component sends an electrical signal to the Programmable Logic Controller (PLC) to activate the camera (6), which then takes at least 2 photographs;
k) When each photograph is taken, the image is stored in the running memory and compared with the information learned and retained by the sexing algorithm, so that the system can make a decision and indicate whether the bird is male or female or rule on the specific individual characteristics under analysis;
l) After the image capture stage, which takes place in the image capture head (2), the hatch (2B) is opened, and then the bird (P) is released into the three-position directing mechanism (17), which then sends it towards the dispatch module.

Optionally, before beginning step a), the process could include transporting the birds on an inclined conveyor or another means, to deposit them on conveyor belt (10), depending on the facilities available.

In step I), the birds (P) coming from the three-position directing mechanism (17) are allowed to slide down separate chutes (18)(20), one for each of the three positions of the directing mechanism, to distribute them into the appropriate allocated crate, via a two-position selector funnel system (19). Once the box is full, the selector funnel (19) turns to fill up the next crate. Each outlet from the three-position directing mechanism (17) leads to a two-position selector chute (19), and, from there, into the appropriate crate, thereby segregating the birds after they have had their sex identified or this needs revisiting.

In step I), the birds (P) can be transferred from the three-position directing mechanism (17) directly onto conveyors. These are sufficient to allow a single row of birds; and each position of the three-position directing mechanism (17) will send them to a specific destination, according to their sex or the need to revisit the analysis. This sends the birds ready for the next stage of the production process.

It is important to stress that the images and the description are not intended to definitively limit the method for implementing the proposed inventive concept. They are, rather, to illustrate and explain the conceptual innovations of this solution.

Therefore, the descriptions and images should be viewed as illustrative only and not definitive. There may be other equivalent or similar ways to implement the inventive concept described here, which do not deviate from the protected scope outlined in this proposed solution.

## Claims

1. **- Equipment for Sexing and Analyzing the Individual Characteristics of Birds,** which is described as an automatic delivery system, consisting of a set of three conveyor belts (10)(11)(12), preferably 80 mm wide, made of canvas. The conveyors are driven individually by shafts connected to their respective transmission boxes (10A)(11A)(12A) and to their respective induction motors (10B) (11B)(12B). The speed of these motors is controlled by frequency inverters. Each conveyor operates at a different speed: the first conveyor (10) operates at a reduced speed - 50% of the speed of conveyor (12); the second conveyor (11) at an intermediate speed - 75% of the speed of conveyor (12); and the third conveyor (12) operates at high speed, between 0.5 and 1.5 m/s, but preferably 1 m/s. There are photoelectric sensors (15) along conveyor (12). When these sensors are triggered, they activate an articulated flap system (14). The system has a rotation axis at its upper end (14B) and is fixed to a small lever arm (14C) that is connected to the rod of a pneumatic actuator (14D) and is activated by it. The flap (14) is made of a rigid block (14A) of nylon with nylon bristles inserted into it. The flap (14) is positioned at the side of the fast conveyor belt (12) parallel to its direction, and also in front of the entrance to the first buffer compartment (13), which is fixed to the opposite side of the conveyor belt (12), also parallel to its direction. The buffer mechanism (13) should preferably be constructed in a rectangular tubular shape, at an angle of 60° to the floor and divided into multiple levels or sections, physically separated by at least two flaps (13A)(13B) and each section should have a photoelectric sensor (16A)(16B) to detect the presence of birds. This sensor (16A)(16B) sends an electrical signal to the Programmable Logic Controller (PLC) to notify it that a bird (P) is in the respective section and indicate that that section is occupied. These flaps (13A)(13B) are made of rubber that is rectangular and shaped to fit the buffer section (13), large enough to isolate the section. It is fixed by one edge to a metal shaft (13E)(13G), which in turn is attached to a small lever arm (13F)(13H) that is connected to the rod of a pneumatic actuator (13C)(13D). The flap (13A) is located in the last section of the buffer (13) and is integrated into the image capture head (2). The frame (1) of the unit includes a base (1A) that supports two vertical rails (1B) to allow the image capture head (2) to move. It has a number of warm air blowers distributed evenly at angles, placed at an upward angle. The frame (1) also has a cam system (3) attached to a shaft (4) positioned by bearings (5) and driven by a motor (9), with a follower (3A) attached through bearings to a fixed shaft (3B) at one end and at the opposite end it supports the retaining structure of the head (2D). There is also a camera (6) and light source (7) positioned at the top center of the head (2). The image capture head (2) is fixed by its outer side to the guides (8) and attached to the rails (1B), which allow the component to move in a vertical direction. The birds (P) are delivered into the head (2) through the top (the opposite side to the hatch (2B)). The aforementioned image capture head (2) is cylindrical and divided into two levels (2A)(2E) with different diameters. The first level (2A) has a bigger internal diameter and the inner chamber (2J) is in the shape of a ring to allow the air pumped through the holes (2C) on the inside surface of the head (2) to circulate. The air chamber is fed by the connections (2F) for the hoses, which in turn are connected to the air distribution pipe (2G). This is fed by a high airflow fan and the temperature is controlled by an electric resistance system (2H). There are also holes (2C) arranged side by side along the diameter, pointing towards the geometric center of the head (2), on the side of the head with the larger internal diameter (2A). These are on its inside and connect the air chamber with the internal part of the head. The second level (2E) of the head (2), meanwhile, has a smaller internal diameter and is attached to the hatch (2B) for releasing the birds. It is fixed at one end to a metal shaft (2L) and this, in turn, is attached to a lever arm (2M), which is connected to the rod of a pneumatic actuator (2K) that operates it. The hatch (2B) remains closed while the analysis is going on, sealing the hole in the head and keeping the bird (P) in place. Once the analysis is over, the hatch (2B) is opened to release the bird and then closed for the next examination. A trigger is used to activate the camera (6) so that it takes at least 2 images of each bird during the downward motion of the image capture head (2). The opening from the hatch (2B) is linked to the three-position directing mechanism (17) which sends the bird (P) to the dispatch module. The directing mechanism (17) is formed by a "U" shaped tube (17A) that is fixed at an angle of 60° to the floor. The base width of the entrance at the top is 1.6 times that of the exit at the bottom, which should preferably have an opening of 80 mm. This forms a funnel. The underside of this chute (17A) is fixed to a rotating vertical shaft (17C) which allows it to rotate horizontally. This rotating vertical shaft is connected to two lever arms (17D) with an angle of 45° between them. These lever arms in turn, are connected at their opposite ends to two pneumatic actuators (17B), one for each arm, which allow the chute to be rotated into three fixed positions - -45°, 0° and 45°. This rotation is controlled by the Programmable Logic Controller (PLC), which activates the actuators (17B) to rotate to the correct position

2. - **Equipment,** as per claim 1, an option described as the conveyor belts (10)(11)(12) having a rough surface.

3. - **Equipment,** as per claim 1, an option described as including an inclined conveyor or another means, before step a), to transport the birds and deposit them on conveyor belt (10),

4. - **Equipment,** as per claim 1, described as using the dispatch module to allocate the birds by crate. In this arrangement, individual chutes (18) lead from each of the three positions of the directing mechanism (17) and there is a two-position selector funnel system (19). The upper end of this is fixed to two bearings, which act as a reference rotating shaft. The selector funnel (19) has a metal shaft on its rear side, connected to a pneumatic actuator that operates it. Each exit from the three-position directing mechanism (17) is linked to a two-position selector chute (19).

5. - **Equipment,** as per claim 1, described as using the dispatch module to allocate the birds to conveyors. The belts should preferably be 80 mm, made from canvas, preferably with a rough surface. The conveyors are driven by separate shafts, attached via respective transmission boxes to respective induction motors. The speed of the motors is controlled by frequency inverters.

6. - **Method for Sexing and Analyzing the Individual Characteristics of Birds,** conducted using the equipment described in claims 1 to 3, and described in terms of the following steps:
a) The birds (P) are placed on conveyor (10), which operates at 50% of the speed of conveyor (12);
b) The birds (P) are transported in a single file to conveyor (11), which operates at 75% of the speed of conveyor (12);
c) The birds (P) are transported to the third conveyor (12), which operates at between 0.5 and 1.5 m/s, but preferably at 1 m/s.
d) When the photoelectric sensors (15) along the path of conveyor (12) detect the birds, they activate an articulated flap system, (14), which pushes and directs the birds (P), individually, into the first buffer compartment (13);
e) When the first section of the buffer (13), separated by flap (13B), is identified by the sensor (16B) as being occupied, the sensor sends an electrical signal to the Programmable Logic Controller (PLC), which prevents flap (14) from being activated again and preventing any more birds (P) entering, until the section is empty again;
f) The flap (14) returns to its original position, allowing the next bird (P) to continue down the conveyor belt (12) until it reaches the next sensor (15) and flap (14);
g) When the sensor (16A) identifies that the section separated by flap (13A) is empty, it sends an electrical signal to the Programmable Logic Controller (PLC) to allow flap (13B) to open. The bird (P) is released down into the next section and flap (13A) remains closed;
h) When the Programmable Logic Controller (PLC) is informed that the hatch (2B) has been opened by the pneumatic actuator (2K), it concludes that the image capture head (2) is empty, and once the hatch (2B) has been closed again, it allows flap (13A) to open. This releases a bird (P) to fall into the image capture head (2) for the next analysis. This process is then repeated successively, so that all the birds (P) in the buffer sections (13) move along one stage, and new birds (P) continue to be delivered into the image capture head (2);
i) When a bird is inside the image capture head (2), the blowers, which have already been activated, keep the fine down on the bird's wings open;
j) While step i) is going on, the image capture head (2) moves vertically, and when it passes the trigger, the component sends an electrical signal to the Programmable Logic Controller (PLC) to activate the camera (6), which then takes at least 2 photographs;
k) When each photograph is taken, the image is stored in the running memory and compared with the information learned and retained by the sexing algorithm, so that the system can make a decision and indicate whether the bird is male or female or rule on the specific individual characteristics under analysis;
l) After the image capture stage, which takes place in the image capture head (2), the hatch (2B) is opened, and then the bird (P) is released into the three-position directing mechanism (17), which then sends it towards the dispatch module.

7. - **Method,** as per claim 4, an option described as: before beginning step a), the process could include transporting the birds on an inclined conveyor or another means, to deposit them on conveyor belt (10).

8. - **Method,** as per claim 4, described as: in step I), the birds (P) coming from the three-position directing mechanism (17) may be released down separate chutes (18)(20), one for each of the three positions of the directing mechanism, to distribute them into the appropriate allocated crate, via a two-position selector funnel system (19). Once the box is full, the selector funnel (19) turns to fill up the next crate. Each outlet from the three-position directing mechanism (17) leads to a two-position selector chute (19), and, from there, into the appropriate crate, thereby segregating the birds after they have had their sex identified or those that need revisiting.

9. - **Method,** as per claim 4, described as: in step I), the birds (P) may be transferred from the three-position directing mechanism (17) directly onto conveyors that are of sufficient size to allow a single row of birds; and each position of the three-position directing mechanism (17) will send them to a specific destination, according to their sex or the need to revisit the analysis. This distributes the birds ready for the next stage of the production process.
